# EUROPÄISCHE PATENTSCHRIFT

(11) **EP 3 094 594 B1**
(45) Veröffentlichungstag und Bekanntmachung des Hinweises auf die Patenterteilung: **28.03.2018**
(21) Anmeldenummer: 14824783.6
(22) Anmeldetag: 17.12.2014
(51) Int. Cl.: C01G 29/00, B41M 5/26, C09C 1/00, B41J 2/44, C08K 3/20

(54) **PIGMENTE AUF DER BASIS VON BISMUTHVERBINDUNGEN**
PIGMENTS BASED ON BISMUTH COMPOUNDS
PIGMENTS À BASE DE COMPOSÉS DE BISMUTH

(30) Priorität: 16.01.2014 DE 102014000359
(43) Veröffentlichungstag der Anmeldung: 23.11.2016
(73) Patentinhaber: Merck Patent GmbH, 64293 Darmstadt (DE)
(72) Erfinder: KNIESS, Helge Bettina, 64380 Rossdorf (DE); VAN DUIJNHOVEN, Franciscus Gerardus Henricus, NL-5731 NX Mierlo (NL); GELISSEN, Franciscus Wilhelmus Maria, 52538 Selfkant (DE)
(86) Internationale Anmeldenummer: PCT/EP2014/003397
(87) Internationale Veröffentlichungsnummer: WO 2015/106788

(56) Entgegenhaltungen:
- EP-A2- 1 190 988
- ACKERMAN ET AL: "The structures of Bi3PbWO8Cl and Bi4NbO8Cl and the evolution of the bipox structure series", JOURNAL OF SOLID STATE CHEMISTRY, ORLANDO, FL, US, Bd. 62, Nr. 1, 15. März 1986 (1986-03-15), Seiten 92-104, XP024193771, ISSN: 0022-4596, DOI: 10.1016/0022-4596(86)90220-3 [gefunden am 1986-03-15]
- MINGYI ZHANG ET AL: "BiOCl nanosheet/Bi4Ti3O12 nanofiber heterostructures with enhanced photocatalytic activity", CATALYSIS COMMUNICATIONS, Bd. 58, 1. Januar 2015 (2015-01-01), Seiten 122-126, XP55180155, ISSN: 1566-7367, DOI: 10.1016/j.catcom.2014.09.021

## Beschreibung

Die vorliegende Erfindung betrifft Pigmente basierend auf Bismut-Verbindungen sowie deren Verwendung, vorzugsweise als laserabsorbierendes Additiv, sowie ein Verfahren für deren Herstellung.

Die Identifikationsmarkierung von Produkten nimmt in annähernd allen Industriezweigen immer weiter an Bedeutung zu. Zum Beispiel ist es häufig notwendig Produktionsdaten, Ablaufdaten, Strichcodes, Firmenlogos, Seriennummern, usw. auf Kunststoffteilen oder flexiblen Kunststofffolien aufzubringen. Diese Beschriftungen werden derzeit meist unter Verwendung herkömmlicher Techniken, wie Drucken, Warmprägen, anderen Prägeverfahren oder Etikettieren ausgeführt. Insbesondere bei Kunststoffen wird jedoch immer mehr Wert auf ein kontaktloses, sehr schnelles und flexibles Beschriftungsverfahren mit Lasern gelegt. Mit dieser Technik lassen sich grafische Aufdrucke, wie z. B. Strichcodes, mit hoher Geschwindigkeit sogar auf nichtplanare Oberflächen aufbringen. Da sich die Beschriftung innerhalb des Kunststoffgegenstands selbst befindet, ist sie dauerhaft abriebfest.

Es ist allgemein bekannt, dass bestimmte Materialien wie Polymere, z. B. Kunststoffe und Harze, bei Bestrahlung mit Laserlicht Energie aus dem Laserlicht absorbieren und diese Energie in Wärme umwandeln können, wobei eine farbverändernde Reaktion (=Beschriftung) im Material induziert werden kann. Laserlichtabsorptionsmittel werden verwendet um die Laserlichtabsorption zu verbessern, wenn die intrinsische Fähigkeit eines Polymers hinsichtlich der Absorption von Laserlicht unzureichend ist.

Viele Kunststoffe, z. B. Polyolefine und Polystyrole, konnten bisher nur schwer oder gar nicht mit einem Laser beschriftet werden. Ein CO₂-Laser, der Infrarotlicht im Bereich von 10,6 µm emittiert, ergibt nur eine sehr schwache, kaum lesbare Beschriftung auf Polyolefinen oder Polystyrolen, selbst bei Verwendung einer hohen Leistung. Bei Polyurethanelastomeren und Polyetheresterelastomeren gibt es keine Wechselwirkung mit Nd-YAG-Lasern, aber bei Verwendung von CO₂-Lasern tritt eine Prägung auf. Ein Kunststoff darf kein Laserlicht reflektieren oder weiterleiten, da es dann nicht zu einer Wechselwirkung kommt. Ebenso darf jedoch keine übermäßig starke Absorption stattfinden, da der Kunststoff in diesem Fall verdampft und nur eine Prägung übrig bleibt. Die Absorption von Laserstrahlen, und daher die Wechselwirkung mit dem Material, hängt von der chemischen Struktur der Zusammensetzung und von der verwendeten Laserwellenlänge ab. Es ist häufig erforderlich geeignete Additive wie Absorptionsmittel zuzusetzen um Kunststoffe laserbeschriftbar zu machen.

Das erfolgreiche Absorptionsmittel sollte eine sehr blasse inhärente Farbe aufweisen und/oder nur in sehr geringen Mengen eingesetzt werden müssen. Aus dem Stand der Technik ist bekannt, dass das Kontrastmittel Antimontrioxid solche Kriterien erfüllt. Allerdings ist Antimontrioxid toxisch und steht im Verdacht kanzerogen zu sein, und daher sind antimonfreie Laserbeschriftungsadditive erwünscht.

Antimonfreie Laserbeschriftungsadditive sind aus der Literatur bekannt, wie z.B. beschrieben in den Patentanmeldungen WO 2011/083100 A1, WO 2011/050934 A2 und WO 2006/065611 A1. In der EP 1 190 988 B1 werden laserbeschriftbare Verbindungen, die Bismut und mindestens ein zusätzliches Metall enthalten, offenbart. US 2007/029294 A1 richtet sich auf die Laserbeschriftung von Polymeren mit Verbindungen der Formel MOCl, wobei M entweder As, Sb oder Bi ist, sowie mit BiONO₃, Bi₂O₂CO₃, BiOOH, BiOF, BiOBr, Bi₂O₃ oder BiOC₃H₅O₇. Ackerman et.al., J.Solid State Chem., 1986, 62(1), 92-1ü4 beschreiben die kristallographischen Strukturelemente einer Verbindung des Typs Bi₅Ti₂O₁₁Cl. WO 2011/050934 A2 beschreibt beispielsweise die Stabilisierung von Bi₂O₃ durch Extrusion von Bi₂O₃ und eines funktionalisierten Polymers, so dass das Bi₂O₃ enthaltende Additiv anschließend in Polymere ("Matrix") mit einem höheren als 220 °C liegenden Schmelzpunkt eingearbeitet werden kann, z.B. in Polyester, Polyamid oder Polycarbonat. Der Nachteil dieser Methode liegt darin, dass das hergestellte Bismut-Additiv nicht universell für jede Polymer-Matrix verwendet kann, d.h. es liegt eine Nicht-Mischbarkeit von verschiedenen Polymeren vor, z. B. mit Polyethylen und Polyamid.

Der Nachteil von auf Bismut basierenden Laserbeschriftungsadditiven ist, dass sie nicht für alle Arten von Kunststoffen geeignet sind. In bestimmten Matrixpolymeren zeigen die Bismut-Verbindungen eine starke Verfärbung, wenn hohe Verarbeitungstemperaturen, d. h. > 220 °C eingesetzt werden. In diesen Fällen kann Bi₂O₃ nicht als Farbbildner für die Laserbeschriftung von Matrixpolymeren, z.B. von Polyamid verwendet werden, da während der Verarbeitung eine exotherme Reaktion (Zersetzung) stattfindet, die zu einer extremen Verfärbung des Produkts führt. Das Produkt wird dunkel und eine Markierung ist nicht mehr zu erkennen.

Aufgabe der vorliegenden Erfindung ist es daher ein Pigment basierend auf ein oder mehreren Bismut-Verbindungen in einer Form bereitzustellen, das als Additiv, vorzugsweise als Laseradditiv, direkt in jedes Polymer universell eingearbeitet werden kann, ohne dass Zersetzungsreaktionen mit der Polymer-Matrix stattfinden. Das Pigment sollte vorzugsweise farblos sein um als Laseradditiv universell einsetzbar zu sein.

Überraschenderweise wurde nun gefunden, dass Pigmente basierend auf ein oder mehreren Bismut-Verbindungen, die mit TiO₂ beschichtet und anschließend geglüht werden, keine Zersetzungsreaktionen bei der Einarbeitung in Kunststoffen zeigen und weiterhin auch keine Schwierigkeiten bei der Verarbeitung, wie z.B. Nicht-Mischbarkeit, zu beobachten sind. Begünstigt wird dies durch die Ausbildung von BiₐTi_{b}O_{c}-Phasen während der Glühung, wie z.B. Bi₂T₄O₁₁-, Bi₂Ti₂O₇- und/oder Bi_{1,74}Ti₂O_{6,62}-Phasen.

Gegenstand der Erfindung sind somit Pigmente der Formel I

m Bi₂O₃ * n BiOX * o BiₐTi_{b}O_{c} * p TiₓO_{y} I

worin
X Halogen
a 1-15
b 1-5
c 1-15,
m 0-5
n 1-5
o 1-5
p 0-5
x 1-8,
y 1-10,
bedeuten.

Gegenstand der vorliegenden Erfindung ist ebenfalls ein Verfahren zur Herstellung der erfindungsgemäßen Pigmente sowie die Verwendung der Pigmente als Additiv u.a. in Farben, Lacken, Kunststoffen, Druckfarben sowie in kosmetischen Formulierungen.

Als Basissubstrat kommen an sich alle dem Fachmann bekannten unbeschichteten Bismut-Verbindungen in Frage, wie z.B. Bi₂O₃, BiOCl, Bi(NO₃)₃, BiONO₃, Bi₂O₂CO₃, BiOOH, BiOF, BiOBr, BiOC₃H₅O₇, Bi(C₇H₅O₂)₃₎ BiPO₄, Bi₂(SO₄)₃, BiₐM_{b}O_{c} (mit M = Zn, Ti, Fe, Cu, AI, Zr, P, Sn, Sr, Si, Y, Nb, La, Ta, Pr, Ca, Mg, Mo, W, Sb, Cr, Ba, Ce und a = 0,3-70, b = 0,05-8 und c = 1-100). Besonders bevorzugte Basissubstrate sind Bi₂O₃, ferner BiOCI, BiOOH, BiOF und BiOBr. Ganz besonders bevorzugt ist als Substrat das Bi₂O₃.

Die Größe des Basissubstrats ist an sich nicht kritisch und kann auf den jeweiligen Anwendungszweck abgestimmt werden. In der Regel liegen die Bismut-Verbindungen als Partikel vor und haben eine Partikelgröße von 0,001 - 100 µm, vorzugsweise von 0,005 - 50 µm, und insbesondere von 0,01 - 10 µm.

Alle dem Fachmann bekannten Bismut-Verbindungen können eingesetzt werden, unabhängig von der Teilchenform. Die Form der Substrate ist nicht kritisch und kann beispielsweise kugelförmig, oval, stäbchenförmig, plättchenförmig oder unförmig sein.

Bi₂O₃ ist kommerziell erhältlich, z. B. von der 5N Plus Lübeck GmbH, Deutschland (früher MCP-HEK GmbH), von Poch S.A., Polen oder von der Merck Millipore GmbH, Deutschland.

Die Beschichtung der Basissubstrate mit TiO₂ erfolgt vorzugsweise nasschemisch, wobei die zur Herstellung von Perlglanzpigmenten entwickelten nass-chemischen Beschichtungsverfahren angewendet werden können. Weiterhin kann die TiO₂-Beschichtung auch in einem Wirbelbettreaktor durch Gasphasenbeschichtung erfolgen, wobei z. B. die in EP 0 045 851 A1 und EP 0 106 235 A1 zur Herstellung von Perlglanzpigmenten vorgeschlagenen Verfahren entsprechend angewendet werden können.

Zum Aufbringen von Titandioxid wird bevorzugt das in US 3,553,001 beschriebene Verfahren eingesetzt. Dabei wird vorzugsweise zu einer auf etwa 50-100 °C, insbesondere 70-80 °C, erhitzten Suspension der Substrate langsam eine wässrige Lösung eines anorganischen Titansalzes zugegeben und der pH-Wert durch gleichzeitiges Zudosieren einer Base bei 0,5 bis 5, insbesondere etwa 1,5 bis 2,5, konstant gehalten, so dass das entsprechende Hydrat direkt auf das Substrat ausgefällt wird, ohne dass es zu Nebenfällungen kommt.

Anschließend werden die beschichteten Substrate abgetrennt, gewaschen und bei 50 - 150 °C in der Regel für 6 - 18 h getrocknet und bei 300 - 815 °C, vorzugsweise bei 500 - 800 °C, in der Regel für 15 min - 2 h geglüht.

Der Mengenanteil von TiO₂ bezogen auf das Substrat beträgt vorzugsweise 0,1-200 %, insbesondere 5-100 % und ganz besonders bevorzugt 10-50 %. In Abhängigkeit von der Form und Größe des eingesetzten Substrats weist die TiO₂-Schicht vorzugsweise Schichtdicken von 1 - 500 nm, insbesondere bevorzugt von 1 - 300 nm auf.

Optional können die erfindungsgemäßen Pigmente noch mit einer oder mehreren zusätzlichen Schichten für die Erzielung von beispielsweise koloristischen Effekten ausgerüstet werden.

Entscheidend für die Stabilisierung der Bismut-Verbindungen ist der Glühprozess nach der Belegung mit TiO₂. Die Glühtemperatur beträgt vorzugsweise ≥ 300 °C. Das finale Pigment weist nach dem Glühprozess eine oder mehrere Mischphasen auf.

Besonders bevorzugte erfindungsgemäße Pigmente enthalten eine oder mehrere Verbindungen ausgewählt aus der Gruppe der folgenden Bismut-Verbindungen:
- Bi₂T₄O₁₁
- Bi₂Ti₂O₇
- Bi_{1,74}Ti₂O_{6,62}.

Ganz besonders bevorzugte Pigmente enthalten folgende Mischphasen:
- BiOCl, Bi₂T₄O₁₁, TiO₂ oder
- BiOCl, Bi₂Ti₂O₇ oder
- BiOCl, Bi_{1,74}Ti₂O_{6,62} oder
- BiOCl, Bi₂T₄O₁₁.

Die erfindungsgemäßen Pigmente liegen als Partikel vor und haben vorzugsweise Partikelgrößen von 0,01 - 100,5 µm, vorzugsweise von 0,02 - 50 µm, und insbesondere von 0,01 - 10 µm.

Die erfindungsgemäßen Pigmente liegen als Partikel vor und können mit allen bekannten Effektpigmenten, konventionellen Absorptionspigmenten und/oder funktionellen Pigmenten in Mischung in allen bekannten Anwendungsmedien eingesetzt werden und ergeben je nach Zusammensetzung der Mischung außergewöhnliche Farb- und Anwendungseffekte, z.B. bei der Laserbeschriftung von Kunststoffteilen.

Die erfindungsgemäßen Pigmente können in Lacken, z.B. Auto- und Industrielacke sowohl lösemittel- als auch wasserbasierend, und Pulverlacke, in Kunststoffen, Druckfarben, keramischen Glasuren oder kosmetischen Formulierungen angewandt werden. Auch können sie in Form von Präparationen (Pearlets, Pasten, Anteigungen), z.B. für den Einsatz in Druckfarben oder Kunststoffen genutzt werden.

Besonders bevorzugt ist der Einsatz der erfindungsgemäßen Pigmente in Kunststoffen mit einem Schmelzpunkt, der mindestens so hoch ist wie der des verwendeten Kunststoffs, vorzugsweise > 220 °C.

Die vorliegende Erfindung betrifft daher auch eine laserbeschriftbare Zusammensetzung, die ein Matrixpolymer und das erfindungsgemäße Pigment enthält. Das Pigment wird vorzugsweise in Konzentrationen von 0,05 - 5 Gew.%, insbesondere von 0,1- 2 Gew.% und ganz besonders bevorzugt von 0,2 - 1 Gew.%, bezogen auf das zu beschriftende Matrixpolymer eingesetzt.

Alle bekannten Matrixpolymere wie z. B. Kunststoffe, Bindemittel, Harze, usw. können für die Laserbeschriftungs- und Laserschweißanwendung eingesetzt werden. Geeignete Kunststoffe sind Thermoplaste und Duroplaste wie z. B. Polyethylen (PE), Polypropylen (PP), Polyamid (PA), Polyester, Polyether, Polyphenylenether, Polyacrylat, Polyurethan (PU), Polyoxymethylen (POM), Polymethacrylat, Polymethylmethacrylat (PMMA), Polyvinylacetat (PVAC), Polystyrol (PS), Acrylnitril-Butadien-Styrol (ABS), Acrylnitril-Styrol-Acrylat (ASA), ABS-gepfropftes Polymer, Polybutylenterephthalat (PBT), Polyethylenterephthalat (PET), Polyvinylchlorid (PVC), Polyvinylidenchlorid (PVDC), Polyvinylidenfluorid (PVDF), Polytetrafluorethylen (PTFE), Polycarbonat (PC), Polyethersulfone, Polyetherketon, thermoplastisches Polyurethan (TPU), thermoplastische Elastomere (TPE), Epoxyharz (EP), Silikonharz (SI), ungesättigtes Polyesterharz (UP), Phenolformaldehydharz (PF), Harnstoffformaldehydharz (UF), Melaminharz (MF) und Copolymere davon und/oder Mischungen davon. Das Polymer kann auch ein Copolymer oder Blockcopolymer, usw. sein. Es können gebräuchliche und geeignete Additive vorhanden sein.

Der Kunststoff wird wie folgt mittels geeigneter Laserbestrahlung beschriftet oder geschweißt.

Die Beschriftungsmethode mittels Laser ist so, dass die Probe in den Strahlengang eines gepulsten Laserstrahls, vorzugsweise eines Nd:YAG-Lasers, gebracht wird. Die Beschriftung kann auch mit einem CO₂-Laser, z. B. unter Verwendung einer Maskentechnik erfolgen. Die gewünschten Ergebnisse können auch mit anderen gebräuchlichen Arten von Lasern erreicht werden, deren Wellenlänge innerhalb des Bereichs der hohen Absorption der verwendeten Mikrokugeln liegt. Die erhaltene Beschriftung wird durch die Bestrahlungsdauer (oder Anzahl von Pulsen im Falle eines gepulsten Lasers) und durch die vom Laser emittierte Leistung sowie durch das verwendete Polymersystem bestimmt. Die Leistung des verwendeten Lasers hängt von der spezifischen Anwendung ab und kann von einem Fachmann in einem spezifischen Fall ohne Weiteres bestimmt werden.

Beim Laserbeschriften hat der verwendete Laser im Allgemeinen eine Wellenlänge in einem Bereich von 157 nm bis 10,6 µm, vorzugsweise in einem Bereich von 532 nm bis 10,6 µm. Beispiele, die genannt werden können, sind ein CO₂-Laser (10,6 µm) und ein Nd:YAG-Laser (1064 nm, 532 nm oder 355 nm) sowie ein gepulster UV-Laser. Excimerlaser weisen die folgenden Wellenlängen auf: F₂-Excimerlaser: 157 nm, ArF-Excimerlaser: 193 nm, KrCl-Excimerlaser: 222 nm, KrF-Excimerlaser: 248 nm, XeCI-Excimerlaser: 308 nm, XeF-Excimerlaser: 351 nm sowie frequenzvervielfachte Nd:YAG-Laser: Wellenlänge von 355 nm (frequenzverdreifacht) oder 265 nm (frequenzvervierfacht). Besonders bevorzugt ist die Verwendung von Nd:YAG-Lasern (1064 oder 532 nm) und CO₂-Lasern. Die Energiedichten der verwendeten Laser liegen im Allgemeinen innerhalb eines Bereichs von 0,3 mJ/cm² bis 50 J/cm², vorzugsweise von 0,3 mJ/cm² bis 10 J/cm².

Werden gepulste Laser verwendet, liegt die Pulsfrequenz im Allgemeinen innerhalb eines Bereichs von 1 bis 150 kHz. Entsprechende Laser, die im erfindungsgemäßen Verfahren verwendet werden können, stehen kommerziell zur Verfügung.

Das Beschriften mit dem Laser wird vorzugsweise ausgeführt, indem der Gegenstand in den Strahlengang eines CO₂-Lasers (10,6 µm) oder eines gepulsten Lasers, vorzugsweise eines Nd:YAG oder Nd:YVO₄-Lasers, eingeführt wird.

Die erfindungsgemäßen Pigmente können in jedem beliebigen Bereich verwendet werden, in dem gebräuchliche Druckprozesse bisher zur Beschriftung oder Markierung von Matrixpolymeren verwendet wurden. Annähernd jeder Kunststoffgegenstand kann in einer lasermarkierbaren oder laserbeschriftbaren Form erhalten werden. Jede Art von Gegenstand, der aus einem Matrixpolymer wie einem Kunststoff besteht, kann mit Funktionsdaten, Strichcodes, Logos, Grafiken, Bildern und Identifizierungscodes versehen werden. Darüber hinaus können sie z.B. Anwendung finden
- in medizinischer Ausrüstung wie Röhrchen, Behältern für Gewebeproben oder Flüssigkeiten, Spritzen, Töpfen, Abdeckungen, Kathetern,
- im Automobilbereich z. B. für Flüssigkeitsbehälter, Verkabelungen, Komponenten,
- im Telekom- und E&E-Bereich z. B. für GSM-Vorderteile, Tastaturen, Mikroschalter,
- in Sicherheits- und Identifizierungsanwendungen wie z. B. Kreditkarten, Identifizierungskarten, Tieridentifizierungsmarken, Etiketten, Sicherheitsstreifen,
- in Marketinganwendungen wie z. B. Logos, Dekoration auf Korken, Golfbällen, Werbeartikeln,
- in Verpackungen wie z. B. ein- und mehrlagigen Folien, Flaschen, Kappen und Verschlüsse, einschließlich Schraubkappen für Flaschen, Sicherheitsverschlüsse und synthetischen Korken.

Zum Beispiel können Formen aus Kunststoffen, die das erfindungsgemäße Pigment enthalten, in der Elektroindustrie, Elektronikindustrie und Motorfahrzeugindustrie verwendet werden. Mit Hilfe von Laserlicht ist es möglich Identifizierungsmarkierungen oder Beschriftungsmarkierungen selbst an Stellen zu erzeugen, zu denen der Zugang schwierig ist, zum Beispiel auf Kabeln, Leitungen, Dekostreifen oder funktionalen Teilen im Heizungs-, Lüftungs- und Kältesektor oder auf Schaltern, Steckern, Hebeln oder Griffen. Das erfindungsgemäße Polymersystem enthaltend Pigmente der Formel I kann auch für Verpackungen im Nahrungsmittel- und Getränkesektor oder im Spielzeugsektor verwendet werden. Die Beschriftungen auf der Verpackung sind wisch- und kratzbeständig, beständig bei nachgelagerten Sterilisierungsprozessen und können auf eine hygienisch saubere Weise beim Beschriftungsprozess eingesetzt werden. Vollständige Etikettenmotive können dauerhaft auf Verpackungen von wiederverwendbaren Systemen aufgebracht werden. Ein weiterer wichtiger Anwendungssektor der Laserbeschriftung ist die Beschriftung von Kunststoffen zur Erzeugung von individuellen Identifizierungsmarkierungen für Tiere, die als Rinderohrmarke oder nur Ohrmarke bekannt sind. Die spezifisch mit dem Tier zusammenhängenden Informationen werden über ein Strichcodesystem gespeichert. Bei Bedarf können sie mithilfe eines Scanners wieder abgerufen werden. Die Beschriftung muss äußert beständig sein, da einige Marken viele Jahre lang an den Tieren verbleiben.

Mit Hilfe der erfindungsgemäßen Pigmente werden bei der Lasermarkierung dunkle Beschriftungen im Polymeren bzw. im Kunststoff erzielt, wobei die Beschriftung einen hohen Kontrast verbunden mit einer hohen Kantenschärfe aufweist.

Laserschweißen mit dem erfindungsgemäßen Pigment kann in allen Bereichen durchgeführt werden, bei denen gebräuchliche Fügeverfahren eingesetzt wurden und in denen es bisher nicht möglich war, den Schweißprozess aufgrund von laserdurchlässigen Polymeren oder blassen Farben einzusetzen. Der Schweißprozess für laserdurchlässige Kunststoffe stellt also eine Alternative zu herkömmlichen Fügeverfahren dar, zum Beispiel Hochfrequenzschweißen, Vibrationsschweißen, Ultraschallschweißen, Heißluftschweißen oder auch Adhäsionskleben von Kunststoffteilen.

Die nachfolgenden Beispiele sind dazu gedacht, die Erfindung zu erläutern, ohne sie einzuschränken. Die Prozentangaben beziehen sich, wenn nicht anders angegeben, auf das Gewicht.

### Beispiele

### Beispiel 1 (100 % TiO₂ bezogen auf das Substrat; Glühtemperatur 750 °C):

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (400 g TiCl₄ Lösung; w= 60 % gelöst in 350 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 12 h getrocknet, 0,5 h bei 750 °C geglüht, durch ein 100 µm Sieb gesiebt und mit Hilfe von XRD untersucht.

Das so erhaltene, leicht gelbliche Material wird mittels Extruder 0,25 %ig in Polyamid eingearbeitet. Dieses Compound wird dann auf einer Spritzgussmaschine zu Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 1 zeigt dabei über nahezu das gesamte Spektrum unterschiedlicher Laserparameter eine gleichmäßige schwarze Markierung von ausgezeichnetem Kontrast.

### Vergleichsbeispiel 1:

### Einarbeitung von Bi₂O₃ in Polyamid

Bi₂O₃ (Bismuth Oxide, varistor grade fine; mittlere Teilchengröße: 2 µm, Fa. 5N Plus Lübeck GmbH) wird mittels Extruder 1 %ig in Polyamid eingearbeitet. Bereits bei der Verarbeitung im Extruder kommt es zu Zersetzungsreaktionen und es entsteht ein dunkel bis schwarz verfärbtes Produkt.

Das "Compound" wird dann auf einer Spritzgussmaschine zu dunkelbraunen bis schwarzen Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert. Der Kontrast der dunklen Beschriftung auf dunklem Untergrund ist mit dem Auge kaum erkennbar.

### Beispiel 2 (12.5 % TiO₂ bezogen auf das Substrat; Glühtemperatur 600 °C):

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (50 g TiCl₄ Lösung; w=60 % gelöst in 44 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 15 h getrocknet, 0,5 h bei 600 °C geglüht, durch ein 100 µm Sieb gesiebt und mit Hilfe von XRD untersucht.

Das so erhaltene, leicht gelbliche Material wird mittels Extruder 0,5 %ig in Polyamid eingearbeitet. Dieses Compound wird dann auf einer Spritzgussmaschine zu Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 2 zeigt dabei über nahezu das gesamte Spektrum unterschiedlicher Laserparameter eine gleichmäßige schwarze Markierung von ausgezeichnetem Kontrast.

### Beispiel 3 (6,25 % TiO₂ bezogen auf das Substrat; Glühtemperatur 750 °C):

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (25 g TiCl₄ Lösung, w=60 % gelöst in 22 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 12 h getrocknet, 2 h bei 750 °C geglüht, durch ein 100 µm Sieb gesiebt und mit Hilfe von XRD untersucht.

Das so erhaltene, leicht gelbliche Material wird mittels Extruder 1,0 %ig in Polyamid eingearbeitet. Dieses Compound wird dann auf einer Spritzgussmaschine zu Testplatten geformt. Auf diese Platten wird mit einem Nd:YAG Laser (Fa. Trumpf: Schreibgeschwindigkeit: 500-5000 mm/s, Pulsfrequenz: 20-100 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 3 zeigt dabei über nahezu das gesamte Spektrum unterschiedlicher Laserparameter eine gleichmäßige schwarze Markierung von ausgezeichnetem Kontrast.

### Beispiel 4 (6,25 % TiO₂ bezogen auf das Substrat; Glühtemperatur 600 °C):

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt.

Es folgt das Zudosieren einer 32 %igen Titantetrachloridlösung (25 g TiCl₄ Lösung, w=60 % gelöst in 22 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 12 h getrocknet, 1 h bei 600 °C geglüht, durch ein 100 µm Sieb gesiebt und mit Hilfe von XRD untersucht.

Das so erhaltene, leicht gelbliche Material wird mittels Extruder 1,0 %ig in Polyamid eingearbeitet. Dieses Compound wird dann auf einer Spritzgussmaschine zu Testplatten geformt. Auf diese Platten wird mit einem Nd:YVO₄ Laser (Fa. Trumpf: Schreibgeschwindigkeit: 4000-10000 mm/s, Pulsfrequenz: 20-60 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 4 zeigt dabei über nahezu das gesamte Spektrum unterschiedlicher Laserparameter eine gleichmäßige schwarze Markierung von ausgezeichnetem Kontrast.

### Beispiel 5 (50 % TiO₂ bezogen auf das Substrat: Glühtemperatur 750 °C):

100 g Bi₂O₃ (Bismuth Oxide, varistor grade fine; mittlere Teilchengröße: 2 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (200 g TiCl₄ Lösung, w=60 % gelöst in 175g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 12 h getrocknet, 1 h bei 750 °C geglüht, durch ein 100 µm Sieb gesiebt und mit Hilfe von XRD untersucht.

Das so erhaltene, leicht gelbliche Material wird mittels Extruder 0,25 %ig in Polyamid eingearbeitet. Dieses Compound wird dann auf einer Spritzgussmaschine zu Testplatten geformt. Auf diese Platten wird mit einem Nd:YVO₄ Laser (Fa. Trumpf: Schreibgeschwindigkeit: 4000-10000 mm/s, Pulsfrequenz: 20-60 kHz) ein Testraster markiert, mit welchem eine große Bandbreite an verschiedenen Lasereinstellungen hinsichtlich Energie des Lasers, Geschwindigkeit des Laserstrahls und Frequenz der Laserpulse dargestellt werden können. Das Additiv aus Beispiel 5 zeigt dabei über nahezu das gesamte Spektrum unterschiedlicher Laserparameter eine gleichmäßige schwarze Markierung von ausgezeichnetem Kontrast.

### Beispiel 6 (12,5 % TiO₂ bezogen auf das Substrat: Glühtemperatur 750 °C):

100 g Bi₂O₃ (Bismuth Oxide, varistor grade; mittlere Teilchengröße: 4 µm, Fa. 5N Plus Lübeck GmbH) werden in 2 l entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (50 g TiCl₄ Lösung, w=60 % gelöst in 44 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 12 h getrocknet, 0,5 h bei 750 °C geglüht, durch ein 100 µm Sieb gesiebt und mit Hilfe von XRD untersucht.

### Beispiel 7 (25,0 % TiO₂ bezogen auf das Substrat; Glühtemperatur 750 °C):

100 g Bi₂O₃ (Bismuth Oxide, varistor grade; mittlere Teilchengröße: 4 µm, Fa. 5N Plus Lübeck GmbH) werden in 2 I entmineralisiertem Wasser unter Rühren auf 75 °C erhitzt.

Nun wird mit einer 25 %igen Salzsäure der pH-Wert der Suspension auf 2,2 eingestellt. Es folgt das Zudosieren einer 32 %igen Titantetrachloridlösung (100 g TiCl₄ Lösung, w=60% gelöst in 88 g voll entsalztem Wasser), wobei der pH Wert durch gleichzeitiges Zutropfen einer 32 %igen Natronlauge konstant gehalten wird.

Nach vollständiger Zugabe wird 0,5 h nachgerührt. Das Produkt wird filtriert, gewaschen, 15 h getrocknet, 1 h bei 750 °C geglüht, durch ein 100 µm Sieb gesiebt und mit Hilfe von XRD untersucht.

Die folgenden Phasen werden bei den Produkten der Beispiele 1 bis 7 laut XRD gefunden:

**Tabelle:**

| **Beispiel** | **Glühtemperatur (°C)** | **TiO₂ (% bez. auf Bi₂O₃)** | **Bi₂O₃ : TiO₂** | **Befund** |
|---|---|---|---|---|
| 1 | 750 | 100 | 50 : 50 | BiOCl, Bi₂T₄O₁₁, TiO₂ |
| 2 | 600 | 12,5 | 90 : 10 | BiOCl, Bi₂Ti₂O₇ |
| 3 | 750 | 6,25 | 94,6 : 6 | BiOCI, Bi_{1,74}Ti₂O_{6,62} |
| 4 | 600 | 6,25 | 94,6 : 6 | BiOCl, Bi₂Ti₂O₇ |
| 5 | 750 | 50 | 67 : 33 | BiOCl, Bi₂T₄O₁₁ |
| 6 | 750 | 12,5 | 90 : 10 | BiOCl, Bi₂T₄O₁₁ |
| 7 | 750 | 25 | 80:20 | BiOCl, Bi₂T₄O₁₁ |

## Patentansprüche

1. Pigment der Formel I,
m Bi₂O₃ * n BiOX * o BiₐTi_{b}O_{c} * p TiₓO_{y} I
wobei
X Halogen
a 1-15
b 1-5
c 1-15,
m 0-5
n 1-5
o 1-5
p 0-5
x 1-8,
y 1-10,
bedeuten.

2. Pigment nach Anspruch 1, **dadurch gekennzeichnet, dass** X Chlor bedeutet.

3. Pigment nach Anspruch 1 oder 2, **dadurch gekennzeichnet, dass** n = 1 ist.

4. Pigment nach einem oder mehreren der Ansprüche 1 bis 3, dadurch gezeichnet, dass a = 1-3 ist.

5. Pigment nach einem oder mehreren der Ansprüche 1 bis 4, dadurch gezeichnet, dass b = 2-5 ist.

6. Pigment nach einem oder mehreren der Ansprüche 1 bis 5, dadurch gezeichnet, dass c = 5-20 ist.

7. Pigment nach einem oder mehreren der Ansprüche 1 bis 6, dadurch gezeichnet, dass es eine oder mehrere Verbindungen aus der Gruppe der Verbindungen
- Bi₂T₄O₁₁
- Bi₂Ti₂O₇
- Bi_{1,74}Ti₂O_{6,62}.
enthält.

8. Pigment nach einem oder mehreren der Ansprüche 1 bis 7, **dadurch gekennzeichnet, dass** das Pigment folgende Mischphasen enthält:
- BiOCl, Bi₂T₄O₁₁, TiO₂ oder
- BiOCl, Bi₂Ti₂O₇ oder
- BiOCl, Bi_{1,74}Ti₂O_{6,62} oder
- BiOCl, Bi₂T₄O₁₁.

9. Pigment nach einem oder mehreren der Ansprüche 1 bis 8, **dadurch gekennzeichnet, dass** das Pigment Partikelgrößen von 0,01 -100,5 µm aufweist.

10. Verfahren zur Herstellung des Pigments nach einem oder mehreren der Ansprüche 1 bis 9, **dadurch gekennzeichnet, dass** eine Bismut-Verbindung ausgewählt aus der Gruppe Bi₂O₃, BiOCl, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (mit M = Zn, Ti, Fe, Cu, Al, Zr, P, Sn, Sr, Si, Y, Nb, La, Ta, Pr, Ca, Mg, Mo, W, Sb, Cr, Ba, Ce und a = 0,3-70, b = 0,05-8 und c = 1-100) mit TiO₂ beschichtet und nachfolgend bei Temperaturen von 300-815 °C geglüht wird.

11. Verfahren nach Anspruch 10, **dadurch gekennzeichnet, dass** die Bismut-Verbindung Bi₂O₃ ist.

12. Verwendung des Pigments nach einem oder mehreren der Ansprüche 1 bis 9 als Additiv für die Lasermarkierung, für das Laserschweißen, in Farben, Lacken, Pulverlacken, Druckfarben, Kunststoffen, in Präparationen, Granulaten.

13. Polymermatrix enthaltend mindestens ein Pigment nach einem oder mehreren der Ansprüche 1 bis 9.

## Claims

1. Pigment of the formula I,
m Bi₂O₃ * n BiOX * o BiₐTi_{b}O_{c} * p TiₓO_{y} I
where
X denotes halogen,
a denotes 1-15,
b denotes 1-5,
c denotes 1-15,
m denotes 0-5,
n denotes 1-5,
o denotes 1-5,
p denotes 0-5,
x denotes 1-8,
y denotes 1-10.

2. Pigment according to Claim 1, **characterised in that** X denotes chlorine.

3. Pigment according to Claim 1 or 2, **characterised in that** n = 1.

4. Pigment according to one or more of Claims 1 to 3, **characterised in that** a = 1-3.

5. Pigment according to one or more of Claims 1 to 4, **characterised in that** b = 2-5.

6. Pigment according to one or more of Claims 1 to 5, **characterised in that** c = 5-20.

7. Pigment according to one or more of Claims 1 to 6, **characterised in that** it comprises one or more compounds from the group of the compounds
- Bi₂T₄O₁₁
- Bi₂Ti₂O₇
- Bi_{1.74}Ti₂O_{6.62}.

8. Pigment according to one or more of Claims 1 to 7, **characterised in that** the pigment comprises the following mixed phases:
- BiOCI, Bi₂T₄O₁₁, TiO₂ or
- BiOCI, Bi₂Ti₂O₇ or
- BiOCl, Bi_{1.74}Ti₂O_{6.62} or
- BiOCl, Bi₂T₄O₁₁.

9. Pigment according to one or more of Claims 1 to 8, **characterised in that** the pigment has particle sizes of 0.01 -100.5 µm.

10. Process for the preparation of the pigment according to one or more of Claims 1 to 9, **characterised in that** a bismuth compound selected from the group Bi₂O₃, BiOCl, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (where M = Zn, Ti, Fe, Cu, Al, Zr, P, Sn, Sr, Si, Y, Nb, La, Ta, Pr, Ca, Mg, Mo, W, Sb, Cr, Ba, Ce and a = 0.3-70, b = 0.05-8 and c = 1-100) is coated with TiO₂ and subsequently calcined at temperatures of 300-815°C.

11. Process according to Claim 10, **characterised in that** the bismuth compound is Bi₂O₃.

12. Use of the pigment according to one or more of Claims 1 to 9 as additive for laser marking, for laser welding, in paints, coatings, powder coatings, printing inks, plastics, in preparations and granules.

13. Polymer matrix comprising at least one pigment according to one or more of Claims 1 to 9.

## Revendications

1. Pigment de la formule I :
m Bi203 * n BiOX * o BiaTibOc * p TiₓO_{y} I
formule dans laquelle :
X représente halogène,
a représente 1-15,
b représente 1-5,
c représente 1-15,
m représente 0-5,
n représente 1-5,
o représente 1-5,
p représente 0-5,
x représente 1-8,
y représente 1-10.

2. Pigment selon la revendication 1, **caractérisé en ce que** X représente le chlore.

3. Pigment selon la revendication 1 ou 2, **caractérisé en ce que** n = 1.

4. Pigment selon une ou plusieurs des revendications 1 à 3, **caractérisé en ce que** a = 1-3.

5. Pigment selon une ou plusieurs des revendications 1 à 4, **caractérisé en ce que** b = 2-5.

6. Pigment selon une ou plusieurs des revendications 1 à 5, **caractérisé en ce que** c = 5-20.

7. Pigment selon une ou plusieurs des revendications 1 à 6, **caractérisé en ce qu'**il comprend un ou plusieurs composé(s) choisi(s) parmi le groupe des composés :
- Bi₂T₄O₁₁
- Bi₂Ti₂O₇
- Bi_{1.74}Ti₂O_{6.62}.

8. Pigment selon une ou plusieurs des revendications 1 à 7, **caractérisé en ce que** le pigment comprend les phases mixtes qui suivent :
- BiOCl, Bi₂T₄O₁₁, TiO₂ ou
- BiOCl, Bi₂Ti₂O₇ ou
- BiOCl, Bi_{1.74}Ti₂O_{6.62} ou
- BiOCl, Bi₂T₄O₁₁.

9. Pigment selon une ou plusieurs des revendications 1 à 8, **caractérisé en ce que** le pigment présente des tailles de particules de 0,01 -100,5 µm.

10. Procédé pour la préparation du pigment selon une ou plusieurs des revendications 1 à 9, **caractérisé en ce qu'**un composé de bismuth qui est sélectionné parmi le groupe Bi₂O₃, BiOCI, BiONO₃, Bi(NO₃)₃, Bi₂O₂CO₃, BiOOH, BiOF, BiOBr, BiOC₃H₅O₇, Bi(C₇H₅O₂)₃, BiPO₄, Bi₂(SO₄)₃, BiₐM_{b}O_{c} (où M = Zn, Ti, Fe, Cu, Al, Zr, P, Sn, Sr, Si, Y, Nb, La, Ta, Pr, Ca, Mg, Mo, W, Sb, Cr, Ba, Ce et a = 0,3-70, b = 0,05-8 et c = 1-100) est revêtu de TiO₂ et est ensuite calciné à des températures de 300-815°C.

11. Procédé selon la revendication 10, **caractérisé en ce que** le composé de bismuth est Bi₂O₃.

12. Utilisation du pigment selon une ou plusieurs des revendications 1 à 9 en tant qu'additif pour le marquage laser, pour le soudage laser, dans les peintures, les revêtements, les revêtements pulvérulents, les encres d'impression, les matières plastiques, dans les préparations et les granules.

13. Matrice de polymère comprenant au moins un pigment selon une ou plusieurs des revendications 1 à 9.
